**Europäisches Patentamt**

(19) **European Patent Office**

**Office européen des brevets**

(11) Publication number: **0 295 544 B1**

# (12) EUROPEAN PATENT SPECIFICATION

(45) Date of publication of patent specification :
08.05.91 Bulletin 91/19

(51) Int. Cl.⁵ : **E01H 5/09, B60R 21/34**

(21) Application number : **88109070.8**

(22) Date of filing : **07.06.88**

(54) **Accident prevention device for rotary snow plow.**

(30) Priority : **17.06.87 IT 1249987**

(43) Date of publication of application :
**21.12.88 Bulletin 88/51**

(45) Publication of the grant of the patent :
**08.05.91 Bulletin 91/19**

(84) Designated Contracting States :
**AT BE CH DE ES FR GB GR LI LU NL SE**

(56) References cited :
**CH-A- 431 588**
**DE-A- 2 513 880**
**DE-A- 3 211 731**
**DE-A- 3 215 391**
**GB-A- 1 513 131**

(73) Proprietor : **FRESIA S.P.A.**
**Via Trento e Trieste n. 30**
**I-17017 Millesimo (SV) (IT)**

(72) Inventor : **Fresia, Giulio**
**Via Trento e Trieste n. 30**
**I-17017 Millesimo (SV) (IT)**

(74) Representative : **Ferrarotti, Giovanni**
**Studio Consulenza Tecnica Dr. Ing. Giovanni**
**Ferrarotti Via Alla Porta Degli Archi 1/7**
**I-16121 Genova (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

It is well known that rotary snowplows are motor driven vehicles equipped at their front end which one or more rotary plows, progressively plowing the snow blanket or piles while dumping it, by centrifugal action, on both sides of the track (see, for example, CH-A-431 588).

Obviously, the front part of these plows or cutters is not protected so that they can perform their job in the snow and this may be a real hazard for people since any accidental contact with these plows might cause aputations or even crushing.

This risk might be obviated by proper protections, adjustable in height according to snow level, although these protections would not be very efficient.

It should be observed that the plow(s) is lave very heavy and are rotating at a rather high speed, so that they have an extremely high inertia and even if the operator were aware of the accident and would stop, the plows would continue to rotate for several seconds thus completing the unlucky event.

This invention has the aim to provide a safety device to protect people from coming accidentally in touch with the plow(s). However, since protection alone is not sufficient, the invention suggests that the main safety device should be a front bar which may be seized and pushed downwards, to acuate the safety control devices. According to the invention, these devices have two actions i.e. they cut-on the plow drives by disengaging the clutch mounted on the driving shaft and block the plows immediately by proper braking.

In this way, any person unfortunately coming near the plows, can immediately stop the plows by lowering the bar. Furthermore, a manual control is provided inside the driver's cab, acting in parallel with the safety bar and having the same function to stop the plows. Thus, the driver can stop the plows together with the victim's action on the bar. This safety control in the cab will also be useful should the driver suddently become aware of an obstacle on his track, so that he can stop the plows without damaging them.

The invention in question is illustrated, in its practical implementation, in the attached drawings in which :

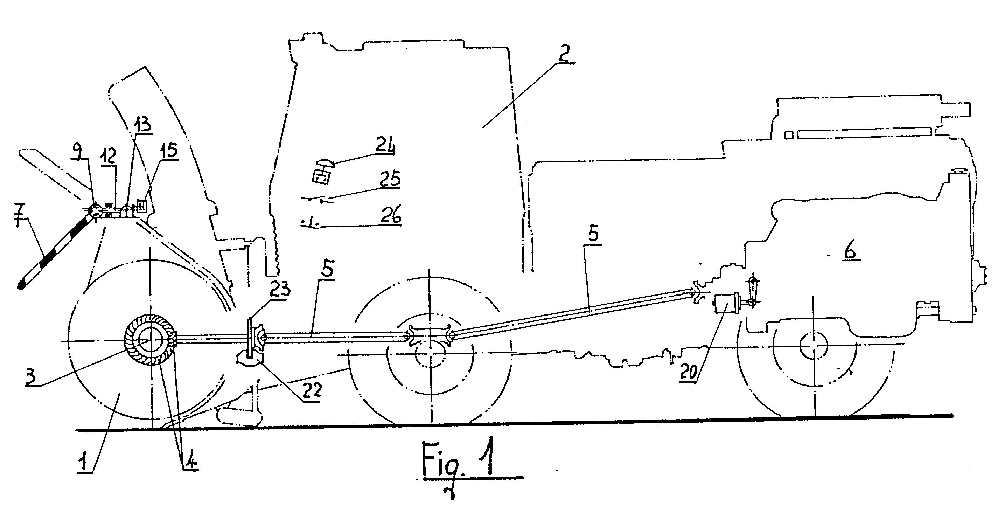

     Fig. 1 shows a schematical side view of the rotary snowplow, provided with the safety device subject matter of this patent ;

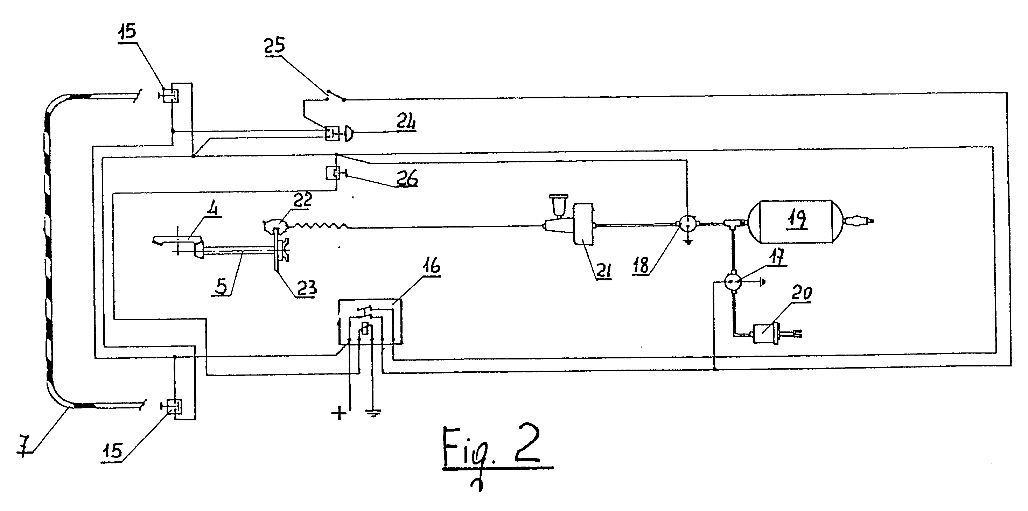

     Fig. 2 shows a top view of the elementary functional diagram of the safety system ;
     Fig. 3 shows a magnified detail of the safety bar and its mechanisms.

With reference to these figures, 1 refers to one or more plows of snowplow 2, mounted on the front of the vehicle. These plows are rotating on a horizontal transverse axis 3 by means of set of bevel gears 4 and a driving shaft 5, driven by the motor 6, which may either be the engine of the vehicle or an auxiliary motor, according to the snowplow type.

A Channel shaped bar 7 is located in front of and above the plows 1 ; this bar is sloping downward 4 and its free ends are connected to central pivots 8 and two lateral disks 9 secured in the required position by shear pins 10 inserted in one of the numerous holes 11 in the disk. Thus, the bar 7 is positioned with a suitable downward inclination, according to the height of the snow blanket and can break loose from the disk if an excessive force is applied to it.

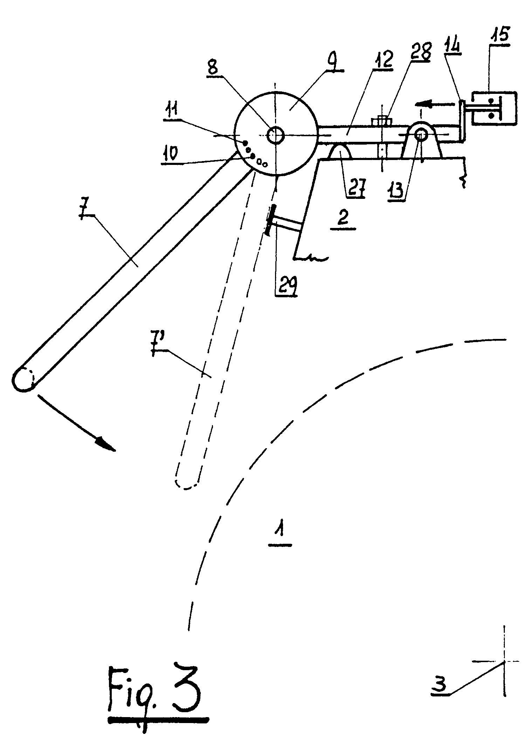

Each lateral disk is rigidly fixed onto a cross member 12 hinged onto a horizontal transverse pin 13 secured to the frame of the vehicle and each cross member terminates at the opposite end of the disk 9, with a pawl 14 which keeps a first electric switch 15 open in normal operating conditions (cf. detail Fig.3).

It is clear that, when the bar 7 is lowered, it will also lower the cross members 12 and the first switches 15 will then close the electric contacts.

These first switches 15 are parallelled on the electrical circuit, so that they can energize separately, by means of a common excitation relay 16, two solenoid valves 17 and 18 located in the pneumatic circuit branched off from the service tank 19. The solenoid 17 is located in the supply line of a pneumatic control cylinder 20 of the clutch (not illustrated) of the driving shaft 5, whereas the solenoid 18 is mounted in the supply line of the pneumohydraulic converter 21 actuating the caliper 22 of the disk brake 23 also mounted on the same driving shaft 5.

It follows that either or both first switches 15 can disengage the clutch of the plow driving shaft 5, when closing the circuit, thus pulling the brake 23 instantaneously blocking the plows 1 by a sudden braking action.

An additional manualy controlled second switch 24 is located in the driver's cab and is parallely connected to the above mentioned first switches 15 which are closed by the bar 7, so that the driver can disangage the clutch and block the plows.

Furthermore, a hand operated contact 25 controls the plow motion and is acting only on the solenoid valve 17 to engage or disengage the clutch of the driving shaft 5. Working conditions are reset by a third switch (push bottom) 26, which can be opened manually, thus de-energizing the solenoid valves 17 and 18 after the plows have been safety-locked. To keep the bar 7 properly lifted, an elastic mechanism 27 is provided acting as a rubber bumper, whereas a bolt 28 prevents accidental lifting of the bar which might damage the first switches 15. A stop 29 will prevent the bar from falling on the plows 1 on failure of the shear pins 10, as illustrated in position 7' of fig. 3.

As already explained, the switches 15 and 24 are actuated on closing but they can also be opened and in that case they will be series- connected, so that opening of either switch will block the plows.

The above mentioned electric control can of course be replaced by pneumatic or hydrodynamic controls, for actuation – either directly or through valves – of the clutch piston and the pneumohydraulic brake converter.

## Claims

1. Accident preventing safety device for a rotary snowplow (2) in which the plows (1) are rotating on a transverse horizontal axis (3) and are motor driven (6) by means of bevel gears (4) and a driving shaft (5), the device comprising, in combination :

    a) a C-shaped bar (7) located in front of the plows and downwardly oscillatingly supported by gudgeons (13) secured onto the vehicle (2),

    b) two electric first switches (15) being closed by the downward oscillation of the bar (7) and parallelly connected in an electric circuit,

    c) a manually closed electric second switch (24), parallelly connected with the aforementioned first switches (15) in the driver's cab,

    d) a solenoid valve (17) fitted in the connection between a service tank (19) and a pneumatic cylinder (20) which controls the driving shaft clutch,

    e) a solenoid valve (18) mounted in the connection between the service tank (19) and a pneumohydraulic converter (21) which actuates the disk brake (23) mounted on the driving shaft (5),

    f) a third switch (76) which is opened manually to reset working conditions after safety interlock,

so that when one or both of the first switches (15) are triggered due to lowering of the bar (7) or when the second switch (24) is closed by the operator, the valves (17, 18) are energized and the plows are stopped immediately by disengagement of the clutch and actuation of the brake.

2. Device as described in claim 1, **characterized** in that the bar (7) is articulated and that its ends are hinged on central pins (8) of disks (9), its inclination being adjustable according to the height of the snow blanket, by means of shear pins (10) inserted in holes (11) drilled in the disks.

3. Device as described in claim 2, **characterized** in that each disk (9) is secured to a cross member (12) hinged onto a gudgeon (13) and bearing at one end a pawl (14) which trips a first switch (15).

4. Device as described in claim 1, **characterized** in that the bar (7) is kept lifted by a flexible mechanism (27) and is prevented from accidental lifting by a bolt (28).

5. Device as described in claim 2, **characterized** in that the bar (7) is prevented by a stop (29) from falling on the plows (1) in case of failure of the shear pins (10).

6. Device as described in claim 1, **characterized** in that the electrical equipment may be replaced by pneumatic or hydrodynamic equipment.

## Ansprüche

1. Vorrichtung zur Unfallverhütung für eine Schneefräse (2), bei der die Fräsen (1) an einer, mittels einer Antriebswelle (5) und Kegelrädern (4) motorgetriebenen (6) horizontalen Querachse (3) drehbar angeordnet sind, gekennzeichnet durch folgende Kombination :

    a) Ein C-förmiger Bügel (7) ist vor den Fräsen nach unten schwingbar mittels Zapfen (13) am Fahrzeug (2) befestigt,

    b) zwei erste elektrische Schalter (15) sind durch die Schwingbewegung des Bügels (7) nach unten zu schließen und sind in einem elektrischen Kreis parallel geschaltet,

    c) ein händisch zu schließender zweiter elektrischer Schalter (24) befindet sich in der Fahrerkabine und ist parallel zu den obgenannten ersten Schaltern (15) geschaltet,

    d) ein Magnetventil (17) ist in der Verbindung zwischen einem Betriebstank (19) und einem die Antriebswellenkupplung steuernden pneumatischen Zylinder (20) angeordnet, e) ein Magnetventil (18) ist in der Verbindung zwischen dem Betriebstank (19) und einem pneumohydraulischen Wandler (21) angeordnet, der die an der Antriebswelle (5) montierte Scheibenbremse (23) betätigt,

    f) ein dritter Schalter (26) ist händisch zu öffnen, um die Betriebsbedingungen nach einer Sicherheitsverriegelung wieder herzustellen,

sodaß, wenn eine oder beide der ersten Schalter (15) zufolge des Absinkens des Bügels (7) geschaltet werden, oder wenn der zweite Schalter (24) durch die Bedienungsperson geschlossen wird, die Ventile (17, 18) betätigt und die Fräsen sofort durch Entkuppeln und Betätigen der Bremse angehalten werden.

2. Vorrichtung nach Anspruch 1, dadurch gekennzeichnet, daß die Enden des gelenkigen Bügels (7) an Mittelzapfen (8) von Scheiben (9) angelenkt sind und die Neigung entsprechend der Höhe der Schneedecke mittels Scherzapfen (10) einstellbar ist, die in Bohrungen (11) der Scheiben einsetzbar sind.

3. Vorrichtung nach Anspruch 2, dadurch gekennzeichnet, daß jede Scheibe (9) an einem Querstück (12) befestigt ist, das an einem Zapfen (13) angelenkt ist und an einem Ende eine Klaue (14) trägt, die einen ersten Schalter (15) betätigt.

4. Vorrichtung nach Anspruch 1, dadurch gekennzeichnet, daß der Bügel (7) durch einen flexiblen Mechanismus (27) hochgehalten und dessen unbeabsichtigtes Anheben durch einen Bolzen (28) verhindert wird.

5. Vorrichtung nach Anspruch 2, dadurch gekennzeichnet, daß der Bügel (7) von einem Fallen auf die Fräsen im Falle eines Bruches der Scherzapfen (10) durch einen Anschlag (29) geschützt ist.

6. Vorrichtung nach Anspruch 1, dadurch gekennzeichnet, daß die elektrische Ausrüstung durch eine pneumatische oder hydrodynamische Ausrüstung ersetzt werden kann.

## Revendications

1. Appareil de sécurité pour la prévention des accidents à monter sur un chasse-neige rotatif (2) dans lequel les socs (1) tournent autour d'un axe transversal horizontal (3) et sont entraînés par un moteur (6) par l'intermediaire de pignons coniques (4) et d'un arbre d'entraînement (5), l'appareil comprenant, en combinaison :

    a) une barre (7) ayant un profil en C installée en avant des socs et supportée en oscillation vers le bas par des goujons (13) fixés sur le véhicule (2),

    b) deux premiers interrupteurs électriques (15) qui se ferment sous l'effet de l'oscillation vers le bas de la barre (7) et sont montés en parallèle dans un circuit électrique,

    c) un second interrupteur électrique (24) manoeuvrable à la main, connecté en parallèle avec les premiers interrupteurs (15) mentionnés ci-dessus, monté dans la cabine du conducteur,

    d) une vanne à solénoïde (17) montée sur la liaison entre un réservoir de service (19) et un vérin pneumatique (20) qui commande l'embrayage de l'arbre d'entraînement,

    e) une vanne à solénoïde (18) montée sur la liaison entre le réservoir de service (19) et un convertisseur pneumo-hydraulique (21) qui actionne le frein à disque (25) monté sur l'arbre d'entraînement (5),

    f) un troisième interrupteur (26) qui s'ouvre à la main pour rétablir les conditions de fonctionnement après un verrouillage de sécurité,

afin que si un ou les deux premiers interrupteurs (15) sont déclenchés par l'abaissement de la barre (7) ou lorsque le second interrupteur (24) est fermé par l'opérateur, les vannes (17, 18) soient excitées et que les socs soient arrêtés immédiatement en débrayant l'embrayage et en appliquant le frein.

2. Appareil selon la revendication 1, caractérisé en ce que la barre (7) est articulée et en ce que ses extrémités sont articulées sur des axes centraux (8) de disques (9), son inclinaison étant réglable an fonction de la hauteur de la couche de neige, en agissant sur des goupilles de cisaillement (10) introduites dans des orifices (11) percés dans les disques.

3. Appareil selon la revendication 2, caractérisé en ce que chaque disque (9) est fixé à une traverse (12) articulée sur un goujon (13) et portant à une extrémité un cliquet (14) qui déclenche un premier interrupteur (15).

4. Appareil selon la revendication 1, caractérisé en ce que la barre (7) est maintenue soulevée par un mécanisme flexible (27) et empêchée de tomber accidentellement par un boulon (28).

5. Appareil selon la revendication 2, caractérisé en ce que la barre (7) est empêchée de tomber sur les socs (1) par une butée (29) en cas de rupture des goupilles de cisaillement (10).

6. Appareil selon la revendication 1, caractérisé en ce que l'équipement électrique peut être remplacé par un équipement pneumatique ou un équipement hydrodynamique.

Fig. 1

EP 0 295 544 B1

Fig. 2

**Fig. 3**